# EUROPÄISCHE PATENTSCHRIFT

(11) **EP 3 948 997 B1**
(45) Veröffentlichungstag und Bekanntmachung des Hinweises auf die Patenterteilung: **07.06.2023**
(21) Anmeldenummer: 20725424.4
(22) Anmeldetag: 23.04.2020
(51) Int. Cl.: H01M 8/0662, B01D 46/00, H01M 8/0668, H01M 8/1018, H01M 8/10

(54) **DIAGNOSESYSTEM FÜR ZUSTANDSORIENTIERTE INSTANDHALTUNG VON BRENNSTOFFZELLENFILTERN**
DIAGNOSTIC SYSTEM FOR CONDITION-BASED MAINTENANCE OF FUEL CELL FILTERS
SYSTÈME DE DIAGNOSTIC DE MAINTENANCE BASÉE SUR L'ETAT DE FILTRES DE PILES À COMBUSTIBLE

(30) Priorität: 26.04.2019 DE 102019206009
(43) Veröffentlichungstag der Anmeldung: 09.02.2022
(73) Patentinhaber: Siemens Mobility GmbH, 81739 München (DE)
(72) Erfinder: ANTRACK, Markus, 01589 Riesa (DE); PEYMANDAR, De-Niang Maria, 91468 Gutenstetten (DE)
(74) Vertreter: Siemens Patent Attorneys
(86) Internationale Anmeldenummer: PCT/EP2020/061325
(87) Internationale Veröffentlichungsnummer: WO 2020/216838

(56) Entgegenhaltungen:
- DE-A1-102005 057 628
- JP-A- H09 155 132
- JP-A- 2009 080 962
- US-A1- 2016 161 457
- US-B1- 8 882 874

## Beschreibung

Die Erfindung betrifft ein Diagnosesystem für einen Filter im Zuleitungsstrom einer Brennstoffzelle und ein Verfahren zur Diagnose eines Filters einer Brennstoffzelle. Brennstoffzellen, insbesondere so genannte PEM-Brennstoffzellen (Protonenaustauschmembran-Brennstoffzelle, Engl. Proton Exchange Membrane Fuel Cell, PEMFC) reagieren empfindlich auf Salze, Stickoxide oder Verbundstoffe mit Schwefel oder Ammoniak, die über die Zuluft in den Prozess gelangen. Für den effizienten Einsatz von mobilen Brennstoffzellen werden daher Filter eingesetzt. Eine effektive Filtration ist unerlässlich, um die sensiblen Bauelemente der Brennstoffzelle zu schützen und für eine höhere Lebensdauer zu sorgen. Diese Filter schützen das Katalysatormaterial und die in den Stack- und Systemkomponenten eingesetzten Membranen dauerhaft vor Schadgasen und Partikeln.

Derartige Filter sind bekannt, beispielsweise aus der DE 102 30 283 A1. Die Filter weisen mehreren Schichten auf, insbesondere einen Partikelfilter zur Sorption von Partikel und Stäuben und einen nachgeschalteten, chemischen Filter zur Aufnahme und Bindung gas- oder dampfförmiger Schadstoffe. Eine Ausprägung ist ein Filtersystem mit Partikelfilterlagen in Kombination mit speziell imprägnierten Aktivkohlen. Das Filtersystem reduziert so die Menge an schädlichen Gasen und Partikeln aus der Zuluft, die in die Brennstoffzelle gelangen können.

JP 2009 080962 A beschreibt ein Diagnosesystem für einen Filter, wobei der Filter in einem Zuluftkanal angeordnet ist, und eine Diagnoseanordnung im Zuluftkanal in Strömungsrichtung der Zuluft nach dem Filter angeordnet ist.

Übliche Instandhaltungskonzepte sehen einen regelmäßigen Tausch der Filter nach einem definierten Intervall vor. Durch kurze und feste Tauschintervalle der Filter, fallen in der Instandhaltung der Brennstoffzelle jedoch hohe Kosten an.

Zur Feststellung der Notwendigkeit der Regenerierung oder Filterwartung schlägt die DE 102 30 283 A1 nun mehrere Gas- oder Schadstoffsensoren hinter dem Filtersystem vor, die auf die Messung der abzuscheidenden Schadstoffe eingestellt sind und deren Messwerte mit je einem Grenzwert verglichen werden, bei dessen Überschreitung eine Meldung erzeugt wird.

Der Erfindung liegt die Aufgabe zugrunde, die Kosten des Betriebs der Brennstoffzelle zu verringern.

Gelöst wird die Aufgabe durch die Merkmale der unabhängigen Patentansprüche. Weiterbildungen und Ausgestaltungen der Erfindung finden sich in den Merkmalen der abhängigen Patentansprüche wieder.

Ein erfindungsgemäßes Diagnosesystem für einen Filter einer Brennstoffzelle ist dadurch gekennzeichnet, dass der Filter in einem Zuluftkanal, in welchem ein Zuluftstrom zu der Brennstoffzelle führbar ist, angeordnet ist, und dass eine Diagnoseeinrichtung im Zuluftkanal in Strömungsrichtung der Zuluft nach dem Filter angeordnet ist, wobei mittels der Diagnoseanordnung eine Beladung des Filters mit wenigstens einem vorgegebenen Stoff bestimmbar ist.

Gemäß der Efindung umfasst die Diagnoseanordnung wenigstens einen Indikator zur Anzeige einer Beladung des Indikators mit wenigstens einem vorgegebenen Stoff.

Unter einem Indikator wird ein Stoff zur Überwachung eines chemischen Zustands verstanden. Indikatoren zeigen einen Zustand meist durch eine bestimmte Farbe, eine Zustandsänderung durch eine Farbveränderung an. Als Stoff wird ein Element, eine Verbindung oder ein Gemisch mit bestimmten Eigenschaften bezeichnet. Fluide sind fließende Stoffe, insbesondere Gase und Flüssigkeiten, aber auch Plasma, Suspensionen und Aerosole.

Der Indikator ändert durch Beladung mit wenigstens einem vorgegebenen Stoff, insbesondere ein Gas, beispielsweise seine Farbe und zeigt damit indirekt den Zustand des vorgeschalteten Filters an, der seinerseits dazu ausgebildet ist, den wenigstens einen vorgegebenen Stoff aus dem Zuleitungsstrom der Brennstoffzelle heraus zu filtern. Dies wird Indikatorreaktion genannt. Mit Beladung ist hier eine vorgegebene Anzahl an Teilchen des Stoffs gemeint.

Ist der Filter jedoch bereits zumindest teilweise zugesetzt, kann er diese Aufgabe nicht mehr hinreichend erfüllen und so können Teilchen des wenigstens einen vorgegebenen Stoffs den Filter durchströmen, zumindest in ausreichender Teilchenzahl, um zur Indikatorreaktion zu führen, auf welchen sie anschließend treffen. Ein voll funktionsfähiger Filter hält Teilchen des wenigstens einen vorgegebenen Stoffs in ausreichendem Ma-βe zurück, so dass, insbesondere über eine vorgegebene Zeitspanne, keine hinreichende Indikatorreaktion eintritt.

Die genannte Zeitspanne betrifft insbesondere die Lebensdauer des Filters.

Gemäß einer Weiterbildung des ersten Aspekts ist der wenigstens eine Indikator derart auf den Filter abgestimmt, dass er den Beladungszustand des Filters abbildet. Übersteigt die Beladung des Indikators ein vorgegebenes Maß, insbesondere die Beladung mit einer vorgegebenen Anzahl an Teilchen des wenigstens einen vorgegebenen Stoffs, tritt eine Indikatorreaktion ein, wie oben beschrieben.

Nun ist der Indikator auf den Filter so abgestimmt, dass die Indikatorreaktion erst erfolgt, wenn die Filterfunktion nicht mehr hinreichend gegeben ist. Dies ist der Fall, wie oben beschrieben, wenn die Beladung des Filters ein kritisches Maß überschreitet. Mit der Indikatorreaktion wird somit die Beladung des Filters über ein vorgegebenes Maß angezeigt, insbesondere über die Beladung des Filters mit einer vorgegebenen Anzahl an Teilchen des wenigstens einen vorgegebenen Stoffs.

Filter und Indikator sind entsprechend ausgebildet und aufeinander abgestimmt. Daher kann in diesem Fall auch von einer mittelbaren Feststellung der Beladung des Filters durch den Indikator gesprochen werden, wobei der Indikator einen Filterzustand anzeigt.

Der wenigstens eine vorgegebene Stoff ist dabei in der Brennstoffzelle unerwünscht. Es handelt sich beispielsweise um einen für die Brennstoffzelle schädlichen Stoff, wie z.B. Kohlenmonoxid (CO), Ammoniak (NH₃), ein Stickoxid (NOₓ), sonstige Amide wie Harnstoff (CH₄N₂O) oder ein Stoff aus der Gruppe der Verbindungen mit Schwefel, wie z.B. Schwefeldioxid (SO₂) oder Schwefelwasserstoff (SH₂).

Der oder die der Brennstoffzelle vorgeschalteten Filter sind entsprechend geeignet, die für die Brennstoffzelle schädlichen Stoffe aus dem Zuleitungsstrom herauszufiltern und somit zurückzuhalten.

Gemäß einer weiteren Weiterbildung des ersten Aspekts ist der zumindest eine Indikator unmittelbar nach dem Filter im Zuleitungsstrom zur Brennstoffzelle angeordnet. Auch eine Anordnung unmittelbar auf dem Filter wäre denkbar, auf dessen der Brennstoffzelle zugewandten Seite. Entsprechend kann die Erfindung auch einen Filter zum Einsatz in einem erfindungsgemäßen Diagnosesystem betreffen, wobei der Filter wenigstens einen Indikator umfasst, welcher auf einer Ausgangsseite des Filters angeordnet, insbesondere unmittelbar appliziert, ist. Die Ausgangsseite des Filters weist im betriebsgemäß montierten Zustand zur Brennstoffzelle hin, so dass der Indikator stromabwärts des Filters angeordnet ist. Eine Eingangsseite ist entsprechend entgegen der Strömung im Zuleitungsstrom gerichtet.

Der Indikator selbst kann ein Substrat oder ein anderes geeignetes Trägermaterial umfassen, auf welchem das Material des Indikators aufgebracht ist.

Vorteilhaft weist das Diagnosesystem gemäß einer weiteren Weiterbildung des ersten Aspekts mehrere, voneinander verschiedene Indikatoren auf, um Beladungen der Indikatoren mit mehreren, voneinander verschiedenen, vorgegebenen Stoffen anzuzeigen.

Eine weitere Weiterbildung des ersten Aspekts sieht einen Halter im Zuluftkanal der Brennstoffzelle vor, welcher dort insbesondere fest installiert ist, mit welchem der wenigstens eine Indikator austauschbar gehalten und somit austauschbar im Zuleitungsstrom der Brennstoffzelle angebracht ist. Indikator und Halter können entsprechend zueinander komplementäre Schnittstellen aufweisen.

Sind mehrere, voneinander verschiedene Indikatoren vorgesehen, können diese auf einem gemeinsamen Trägermaterial angeordnet und zusammen mittels des Halters im Zuleitungsstrom der Brennstoffzelle gehalten und somit austauschbar sein oder sie sind einzeln in einem im Zuleitungsstrom der Brennstoffzelle angeordneten Kammersystem angeordnet, wobei eine einzelne Kammer des Kammersystems als Halter für einen einzelnen Indikator dient, welche dann auch unabhängig voneinander einzeln austauschbar sind.

Gemäß der Erfindung umfasst das Diagnosesystem wenigstens einen optischen Detektor, beispielsweise ein Photosensor, insbesondere eine Kamera, zur optischen Erfassung einer Indikatorreaktion des wenigstens einen Indikators. Der optische Detektor ist entsprechend auf den wenigstens einen Indikator ausgerichtet und geeignet, eine Indikatorreaktion zu erfassen. Das Diagnosesystem kann weiterhin eine Mensch-Maschine-Schnittstelle, insbesondere in Form eines Bildschirms, beispielsweise ein Display, zur Darstellung des mittels des optischen Detektors erfassten wenigstens einen Indikators aufweisen. Der erfasste Indikator kann so mittelbar durch Personal verantwortlich für den Betrieb der Brennstoffzelle, beispielsweise ein Service-Mitarbeiter, in Augenschein genommen werden. Hierauf kann eine Beurteilung zur Beladung des Filters und zum Tausch des Filters erfolgen. Grundsätzlich wäre auch eine automatische Auswertung der optischen Information, erfasst durch den optischen Detektor durch eine geeignet ausgebildete Auswerteinheit denkbar. Bei Erreichen einer kritischen Beladung des Indikators, angezeigt durch den Indikator selbst, kann ein entsprechendes Signal erzeugt werden, welches das zuständige Personal veranlasst, den Filter zu tauschen.

Alternativ lässt sich der Indikator bei einem turnusgemäß durchgeführten Service vom zuständigen Personal überprüfen.

Gemäß einem zweiten Aspekt umfasst die Diagnoseanordnung alternativ oder ergänzend zum ersten Aspekt wenigstens eine ionenleitende Keramik. Insbesondere ist die Keramik vorteilhat als eine ionenleitende Dünnschichtkeramik ausgeführt, welche die Eigenschaft besitzen, abhängig von der Beladung der Oberfläche mit Partikeln einen unterschiedlichen Widerstand aufzuweisen. Diese Änderung des Widerstands ist dadurch bedingt, dass sich an der Oberfläche der Keramik absetzende Partikel eine Wandlung von Sauerstoffmolekülen in Sauerstoffionen verhindern, wodurch der Widerstand steigt.

Gemäß einer Weiterbildung des zweiten Aspekts umfasst die Diagnoseanordnung wenigstens eine insbesondere außerhalb des Zuluftkanals angeordnete Widerstandsmessanordnung zur Messung eines beladungsabhängigen Widerstands der ionenleitenden Keramik.

Durch eine insbesondere kontinuierliche Messung des Widerstands und einer bekannten Relation des Widerstands zu einer die Beladung des Filters widerspiegelnden Filterkennlinie kann auf den Beladungszustand des Filters geschlossen werden. Eine Auswertung des gemessenen Widerstands kann entsprechend den vorstehenden Ausführungen durch Service-Mitarbeiter erfolgen, welche einen mittels einer geeigneten Mensch-Maschine-Schnittstelle ausgegebenen Widerstandswert mit der bekannten Filterkennlinie vergleichen sowie gegebenenfalls die tatsächliche Beladung des Filters durch eine Inaugenscheinnahme des Filters ermitteln. Aus diesen Informationen können die Service-Mitarbeiter das Erfordernis eines zeitnahen Austauschs bzw. einen anzustrebenden Zeitpunkt für den Austausch des Filters bestimmen. Alternativ kann wiederum eine automatische Auswertung erfolgen, beispielsweise durch einen insbesondere periodischen Vergleich des gemessenen Widerstands mit einem vorgegebenen Schwellwert in einer geeignet ausgestalteten Auswerteeinheit, wobei die Auswerteeinheit wiederum als integraler Bestandteil der Widerstandsmessanordnung oder einer die Funktion der Brennstoffzelle steuernden Steuereinrichtung verwirklicht sein kann. Bei Überschreiten des vorgegebenen Schwellwertes kann eine entsprechende Information über eine Mensch-Maschine-Schnittstelle ausgegeben werden, sodass diese für Service-Mitarbeiter erfassbar sind. Alternativ kann ebenso eine Information bezüglich des gemessenen Widerstands periodisch bzw. bei Überschreiten des vorgegebenen Schwellwertes zu einer zentralen Einheit außerhalb des Fahrzeugs, auf welchem die Brennstoffzelle angeordnet ist, gegebenenfalls zusammen mit weiteren die Funktion der Brennstoffzelle betreffenden Informationen gesendet werden. Diese zentrale Einheit bzw. von dieser über eine Mensch-Maschine-Schnittstelle ausgegebene Informationen können dann dazu dienen, den Austausch des Filter bzw. zumindest eine Inaugenscheinnahme des Filters durch Service-Mitarbeiter zu initiieren.

Die Erfindung betrifft weiterhin ein Fahrzeug umfassend wenigstens eine Brennstoffzelle und wenigstens ein erfindungsgemäßes Diagnosesystem.

Insbesondere kann das Fahrzeug gemäß einer Weiterbildung als ein Schienenfahrzeug verwirklicht sein.

Weiterhin betrifft die Erfindung ein Verfahren zur Diagnose wenigstens eines Filter einer Brennstoffzelle, welches dadurch gekennzeichnet ist, dass der Filter und eine Diagnoseanordnung in einem Zuluftkanal, in welchem ein Zuluftstrom zu der Brennstoffzelle führbar ist, angeordnet sind, wobei die Diagnoseanordnung im Zuluftkanal in Strömungsrichtung der Zuluft nach dem Filter angeordnet ist und wobei zur Diagnose einer Beladung des Filters mit wenigstens einem vorgegebenen Stoff eine Beladung der Diagnoseanordnung mit dem wenigstens einen vorgegebenen Stoff überwacht wird.

Gemäß einer Weiterbildung des Verfahrens umfasst die Diagnoseanordnung wenigstens einen Indikator und/oder wenigstens eine ionenleitende Keramik zur Anzeige einer jeweiligen Beladung mit wenigstens einem vorgegebenen Stoff.

Gemäß einer weiteren Weiterbildung des Verfahrens wird bei Überschreiten einer vorgegebenen Beladung des Indikators, insbesondere von diesem selbst angezeigt durch eine Indikatorreaktion, wie beispielsweise ein Farbwechsel, eine durchzuführende Instandhaltung angezeigt. So kann ein entsprechendes Signal erzeugt und ausgegeben werden. Entsprechendes gilt bei einem Überschreiten eines vorgegebenen Widerstandswerts der ionenleitenden Keramik. Der Filter wird bei der Instandhaltung dann gereinigt oder bevorzugter Weise ausgetauscht.

Ist der Filter in einem Zuluftkanal einer Brennstoffzelle an Bord eines Fahrzeugs, beispielsweise eines Schienenfahrzeugs, angeordnet, kann die Instandhaltung des Filters weitergebildet in Abhängigkeit einer vom Fahrzeug zu befahrenden Strecke erfolgen. Somit kann gegebenenfalls der Austausch eines Filters bei einer bekannt wenig schadstoffbelasteten Strecke noch zeitlich verschoben werden, während ein Filter auf einem Fahrzeug, welches eine bekannt schadstoffbelastete Strecke zu befahren hat, ausgetauscht werden muss.

Sowohl Indikatoren und als auch optische Detektoren zur Erfassung des oder der Indikatoren sind signifikant weniger anfällig als Gassensoren, die Konzentrationen an vorgegebenen Stoffen in ihrer unmittelbaren Umgebung messen, insbesondere hinsichtlich äußerer Störeinflüsse. Darüber hinaus sind die Konzentrationen der für die Brennstoffzelle schädlichen und somit herauszufilternden Stoffe im Zuleitungsstrom äußert klein - sie liegen oft in einem Bereich von einem Milliardstel Teilchen ("parts per billion", abgekürzt "ppb"). Gassensoren zur Messung solch kleiner Konzentrationen sind, je nach zu messendem Stoff, derzeit nicht verfügbar, relativ ungenau oder vergleichsweise störanfällig. Hier bietet das erfindungsgemäße Diagnosesystem mit leicht austauschbaren Indikatoren wesentliche Vorteile in Handhabung, Kosten, Genauigkeit und Verlässlichkeit.

Eine zustandsorientierte Instandhaltung kann die Instandhaltungskosten wesentlich senken, indem der Lebenszyklus der Filter maximal genutzt wird, anstatt diese unabhängig vom jeweiligen technischen Zustand pauschal nach einem festen Intervall zu tauschen. Eine zustandsabhängige Prüfung der Filter während des Betriebes wird durch das erfindungsgemäße Diagnosesystem ermöglicht.

Ein Vorteil der Verwendung des erfindungsgemäßen Diagnosesystems zur Zustandsbestimmung der Filter besteht darin, dass diese so lange genutzt werden, bis ihr Abnutzungsvorrat nahezu vollständig erreicht wurde. Durch den Entfall der intervallabhängigen Instandhaltung in regelmäßigen festgelegten Zeitabständen, werden so durch eine zustandsabhängige Instandhaltung die Voraussetzungen geschaffen, die maximale Lebensdauer der Filter nutzen zu können. Könnten Filter, die unabhängig von deren technischen Zustand beispielsweise turnusgemäß alle 3 Monate ausgetauscht werden, durch die Umstellung auf die zustandsabhängige Instandhaltung im Schnitt nur alle 6 Monate getauscht werden, entspräche dies einer Verdopplung ihrer Nutzungsdauer.

Hierbei werden nicht nur die Kosten an zu wechselnden Filtern über den Lebenszyklus, welcher bei Schienenfahrzeugen üblicherweise rund 30 Jahren entspricht, eingespart, sondern auch der vorzuhaltende Ersatzteilvorrat an Filtern vorteilhaft verringert.

Die Erfindung lässt zahlreiche Ausführungsformen zu. Sie wird anhand der nachfolgenden Figur näher erläutert, in der ein Ausgestaltungsbeispiel dargestellt ist.

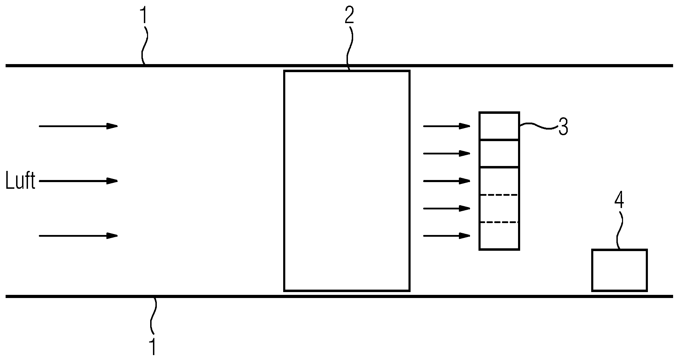

In der Figur ist der Aufbau eines Filtersystems mit Indikatoren schematisch dargestellt. Die Brennstoffzelle sowie die dargestellten Komponenten sind auf einem Schienenfahrzeug eingesetzt.

Dargestellt ist ein Zuluftkanal 1 einer Brennstoffzelle. Der Zuleitungsstrom aus Fluid, hier ein Gas oder ein Gasgemisch, beispielsweise Umgebungsluft, ist mittels Pfeilen in Strömungsrichtung des Gases bzw. des Gasgemisches veranschaulicht. Er wird im Zuluftkanal 1 geführt. Die Brennstoffzelle selbst ist nicht dargestellt, sie ist stromabwärts angeordnet. Die angesaugte Luft strömt durch den Zuluftkanal 1 in Richtung eines Brennstoffzellenstapels (Engl. fuel cell stack).

Ein davor geschalteter Filter 2 im Zuluftkanal 1 dient der Filterung von unerwünschten Schadstoffen aus der Zuluft und somit der Reinigung des der Brennstoffzelle zugeführten Fluidstroms. Ein chemischer Filteranteil des zu überwachenden Filters 2 kann Aktivkohle umfassen. An dessen Oberfläche setzen sich die gefilterten Stoffe ab.

Die Anordnung umfasst stromabwärts des Filters, diesem also nachgeschaltet, ein System aus Indikatoren 3 als eine Diagnoseanordnung. Das System besteht hier aus mehreren Lagen von Indikatoren 3, die spezifisch auf die lebensdauerrelevanten Schadgase ausgelegt sind. Die Indikatoren 3 sind in einem Halter austauschbar gehalten. Durch die Indikatoren 3 wird die chemische Beladung bestimmt.

Beispielsweise können ammoniakhaltige Schadgase durch Säurebase-reaktive Indikatoren identifiziert werden. Hierzu würde eine einfache pH-Messung dieser Schicht während eines regulären Wartungsintervalls Informationen über den Beladungszustand des Filters geben.

Ähnliche Indikatoren sind für Schadstoffe wie CO, SO₂ oder NOₓ oder weiteres entwickelt. Hierzu kann die chemische Reaktion mit diesen Schadstoffen genutzt werden, um einen Farbumschlag des Indikators 3 zu erzeugen. Eine Bewertung des technischen Zustandes erfolgt anhand dieses Farbumschlags der Indikatoren 3. Dieser wird beispielsweise durch ein UV-Sensor detektiert und gibt somit dem Servicemitarbeiter die Information des Beladungszustandes des Filters wieder. Hier ist eine Kamera 4 auf die Indikatoren 3 ausgerichtet hinter den Indikatoren 3 im Zuleitungsstrom angeordnet und erfasst deren eventuelle Farbwechsel.

Der Servicemitarbeiter kann mit dieser Information den Austausch des Filters anordnen oder je nach vom Schienenfahrzeug befahrener Strecke, beispielsweise bekanntermaßen schadstoffarme Strecken, den Filter weiterverwenden und einen Austausch des Filters erst zu einem späteren Zeitpunkt durchführen.

Alternativ oder ergänzend zu einem oder mehreren Indikatoren kann eine ionenleitende Keramik in dem Zuluftkanal, in Strömungsrichtung der Zuluft nach dem Filter, angeordnet sein. Die Keramik kann dabei als eine Dünnschichtkeramik ausgestaltet sein. Mittels einer Widerstandsmessung, welche repräsentativ für die Beladung der Keramik-Oberfläche mit Partikeln ist, kann durch Abgleich mit einer Filterkennlinie auf den Beladungszustand des Filters geschlossen werden.

## Patentansprüche

1. Diagnosesystem für einen Filter (2) einer Brennstoffzelle, der Filter (2) in einem Zuluftkanal (1), in welchem ein Zuluftstrom zu der Brennstoffzelle führbar ist, angeordnet ist, und
eine Diagnoseanordnung im Zuluftkanal (1) in Strömungsrichtung der Zuluft nach dem Filter (2) angeordnet ist, wobei mittels der Diagnoseanordnung eine Beladung des Filters mit wenigstens einem vorgegebenen Stoff bestimmbar ist,
**dadurch gekennzeichnet, dass**
die Diagnoseanordnung wenigstens einen Indikator (3) zur Anzeige einer Beladung des Indikators (3) mit wenigstens einem vorgegebenen Stoff umfasst, und die Diagnoseanordnung wenigstens einen optischen Detektor (4) zur optischen Erfassung einer Indikatorreaktion des wenigstens einen Indikators (3) umfasst.

2. Diagnosesystem nach Anspruch 1,
**dadurch gekennzeichnet, dass**
der wenigstens eine Indikator (3) so auf den Filter (2) abgestimmt ist, dass er den Beladungszustand des Filters (2) abbildet.

3. Diagnosesystem nach Anspruch 1 oder 2,
**dadurch gekennzeichnet, dass**
der wenigstens eine Indikator (3) unmittelbar nach dem Filter (2) im Zuluftstrom der Brennstoffzelle angeordnet ist.

4. Diagnosesystem nach einem der Ansprüche 1 bis 3,
**dadurch gekennzeichnet, dass**
die Diagnoseanordnung mehrere, voneinander verschiedene Indikatoren (3) zur Anzeige einer Beladung der Indikatoren (3) mit mehreren, voneinander verschiedenen vorgegebenen Stoffen aufweist.

5. Diagnosesystem nach einem der Ansprüche 1 bis 4,
**dadurch gekennzeichnet, dass**
es wenigstens einen Halter im Zuluftkanal (1) der Brennstoffzelle aufweist, in welchem der wenigstens eine Indikator (3) austauschbar gehalten ist.

6. Diagnosesystem nach einem der Ansprüche 1 bis 5,
**dadurch gekennzeichnet, dass**
die Diagnoseanordnung wenigstens eine ionenleitende Keramik umfasst.

7. Diagnosesystem nach Anspruch 6,
**dadurch gekennzeichnet, dass**
die Diagnoseanordnung wenigstens eine insbesondere außerhalb des Zuluftkanals (1) angeordnete Widerstandsmessanordnung umfasst zur Messung eines beladungsabhängigen Widerstands der ionenleitenden Keramik.

8. Fahrzeug, umfassend
wenigstens eine Brennstoffzelle und wenigstens ein Diagnosesystem nach einem der Ansprüche 1 bis 7.

9. Fahrzeug nach Anspruch 8,
**dadurch gekennzeichnet, dass**
es als ein Schienenfahrzeug ausgestaltet ist.

10. Verfahren zur Diagnose wenigstens eines Filters einer Brennstoffzelle, wobei der Filter (2) und eine Diagnoseanordnung in einem Zuluftkanal (1), in welchem ein Zuluftstrom zu der Brennstoffzelle führbar ist, angeordnet sind, wobei die Diagnoseanordnung im Zuluftkanal (1) in Strömungsrichtung der Zuluft nach dem Filter (2) angeordnet ist und wobei zur Diagnose einer Beladung des Filters mit wenigstens einem vorgegebenen Stoff eine Beladung der Diagnoseanordnung mit dem wenigstens einen vorgegebenen Stoff überwacht wird,
**dadurch gekennzeichnet, dass**
die Diagnoseanordnung wenigstens einen Indikator (3) zur Anzeige einer Beladung des Indikators (3) mit wenigstens einem vorgegebenen Stoff umfasst, und die Diagnoseanordnung wenigstens einen optischen Detektor (4) umfasst, mittels welchem eine Indikatorreaktion des wenigstens einen Indikators (3) optisch erfasst wird.

11. Verfahren nach Anspruch 10,
**dadurch gekennzeichnet, dass**
die Diagnoseanordnung wenigstens eine ionenleitende Keramik zur Anzeige einer jeweiligen Beladung mit wenigstens einem vorgegebenen Stoff umfasst.

12. Verfahren nach Anspruch 10 oder 11,
**dadurch gekennzeichnet, dass**
der Filter (2) bei Überschreiten einer vorgegebenen Beladung des Indikators und/oder bei Überschreiten eines vorgegebenen Widerstandswertes ausgetauscht wird.

13. Verfahren nach einem der Ansprüche 10 bis 12,
**dadurch gekennzeichnet, dass**
der Filter in einem Zuluftkanal (1) einer Brennstoffzelle auf einem Fahrzeug, insbesondere einem Schienenfahrzeug, angeordnet ist, wobei der Filter in Abhängigkeit einer vom Fahrzeug zu befahrenden Strecke ausgetauscht wird.

## Claims

1. Diagnostic system for a filter (2) of a fuel cell,
the filter (2) is arranged in a supply air duct (1), in which a supply air flow can be guided toward the fuel cell, and
a diagnostic arrangement is arranged after the filter (2) in the supply air duct (1) in the flow direction of the supply air, wherein by means of the diagnostic arrangement it is possible to determine a loading of the filter with at least one predefined substance,
**characterised in that**
the diagnostic arrangement comprises at least one indicator (3) for indicating a loading of the indicator (3) with at least one predefined substance, and the diagnostic arrangement comprises at least one optical detector (4) for optically recording an indicator reaction of the at least one indicator (3) .

2. Diagnostic system according to claim 1,
**characterised in that**
the at least one indicator (3) is tailored to the filter (2) in such a way that it reproduces the loading state of the filter (2).

3. Diagnostic system according to claim 1 or 2,
**characterised in that**
the at least one indicator (3) is arranged immediately after the filter (2) in the supply air flow of the fuel cell.

4. Diagnostic system according to one of claims 1 to 3,
**characterised in that**
the diagnostic arrangement has multiple indicators (3) which are different from one another for indicating a loading of the indicators (3) with multiple predefined substances which are different from one another.

5. Diagnostic system according to one of claims 1 to 4,
**characterised in that**
it has a holder in the supply air duct (1) of the fuel cell, in which the at least one indicator (3) is held in a replaceable manner.

6. Diagnostic system according to one of claims 1 to 5,
**characterised in that**
the diagnostic arrangement comprises at least one ion-conducting ceramic.

7. Diagnostic system according to claim 6,
**characterised in that**
the diagnostic arrangement comprises at least one resistance measurement arrangement, in particular arranged outside the supply air duct (1), for measuring a loading-dependent resistance of the ion-conducting ceramic.

8. Vehicle, comprising
at least one fuel cell and at least one diagnostic system according to one of claims 1 to 7.

9. Vehicle according to claim 8,
**characterised in that**
it is embodied as a rail vehicle.

10. Method for diagnosis of at least one filter of a fuel cell, wherein the filter (2) and a diagnostic arrangement are arranged in a supply air duct (1), in which a supply air flow can be guided toward the fuel cell, wherein the diagnostic arrangement is arranged after the filter (2) in the supply air duct (1) in the flow direction of the supply air and wherein, in order to diagnose a loading of the filter with at least one predefined substance, a loading of the diagnostic arrangement with the at least one predefined substance is monitored,
**characterised in that**
the diagnostic arrangement comprises at least one indicator (3) for indicating a loading of the indicator (3) with at least one predefined substance, and the diagnostic arrangement comprises at least one optical detector (4), by means of which an indicator reaction of the at least one indicator (3) is optically recorded.

11. Method according to claim 10,
**characterised in that**
the diagnostic arrangement comprises at least one ion-conducting ceramic for indicating a respective loading with at least one predefined substance.

12. Method according to claim 10 or 11,
**characterised in that**
the filter (2) is replaced when a predefined loading of the indicator is exceeded and/or when a predefined resistance value is exceeded.

13. Method according to one of claims 10 to 12,
**characterised in that**
the filter is arranged in a supply air duct (1) of a fuel cell on a vehicle, in particular a rail vehicle, wherein the filter is replaced as a function of a route to be travelled by the vehicle.

## Revendications

1. Système de diagnostic pour un filtre (2) d'une pile à combustible, le filtre (2) est monté dans un conduit (1) d'arrivée d'air, dans lequel un courant d'air arrivant peut être envoyé à la pile à combustible, et
un dispositif de diagnostic est monté dans le conduit (1) d'arrivée d'air, dans le sens de l'air arrivant, en aval du filtre (2), dans lequel, au moyen du dispositif de diagnostic, une charge de filtre en au moins une substance donnée à l'avance peut être déterminée,
**caractérisé en ce que**
le dispositif de diagnostic comprend au moins un indicateur (3) d'indication d'une charge de l'indicateur (3) en au moins une substance donnée à l'avance, et le dispositif de diagnostic comprend au moins un détecteur (4) optique pour la détection optique d'une réaction du au moins un indicateur (3).

2. Système de diagnostic suivant la revendication 1,
**caractérisé en ce que**
le au moins un indicateur (3) est adapté au filtre (2), de manière à ce qu'il représente l'état de charge du filtre (2).

3. Système de diagnostic suivant la revendication 1 ou 2,
**caractérisé en ce que**
le au moins un indicateur (3) est monté directement en aval du filtre (2) dans le courant d'arrivée d'air de la pile à combustible.

4. Système de diagnostic suivant l'une des revendications 1 à 3,
**caractérisé en ce que**
le dispositif de diagnostic a plusieurs indicateurs (3) distincts les uns des autres, pour l'indication d'une charge des indicateurs (3) en plusieurs substances données à l'avance différentes les unes des autres.

5. Système de diagnostic suivant l'une des revendications 1 à 4,
**caractérisé en ce qu'**
il a, dans le conduit (1) d'arrivée d'air de la pile à combustible, au moins un support, dans lequel le au moins un indicateur (3) est retenu avec possibilité de remplacement.

6. Système de diagnostic suivant l'une des revendications 1 à 5,
**caractérisé en ce que**
le dispositif de diagnostic comprend au moins une céramique conductrice des ions.

7. Système de diagnostic suivant la revendication 6,
**caractérisé en ce que**
le dispositif de diagnostic comprend au moins un dispositif de mesure de la résistance, monté notamment à l'extérieur du conduit (1) d'arrivée d'air, pour la mesure d'une résistance en fonction de la charge de la céramique conductrice des ions.

8. Véhicule, comprenant
au moins une pile à combustible et au moins un système de diagnostic suivant l'une des revendications 1 à 7.

9. Véhicule suivant la revendication 8,
**caractérisé en ce qu'**
il est conformé en véhicule ferroviaire.

10. Procédé de diagnostic d'au moins un filtre d'une pile à combustible, dans lequel le filtre (2) et un dispositif de diagnostic sont montés dans un conduit (1) d'arrivée d'air, dans lequel un courant d'air arrivant peut être envoyé à la pile à combustible, dans lequel le dispositif de diagnostic est monté dans le conduit (1) d'arrivée d'air, dans le sens du courant de l'air arrivant en aval du filtre (2) et dans lequel, pour le diagnostic d'une charge du filtre en au moins une substance donnée à l'avance, on contrôle une charge du dispositif de diagnostic en la au moins une substance donnée à l'avance,
**caractérisé en ce que**
le dispositif de diagnostic comprend au moins un indicateur (3) d'indication d'une charge de l'indicateur (3) en au moins une substance donnée à l'avance, et le dispositif de diagnostic comprend au moins un détecteur (4) optique, au moyen duquel on détecte optiquement une réaction du au moins un indicateur (3).

11. Procédé suivant la revendication 10,
**caractérisé en ce que**
le dispositif de diagnostic comprend au moins une céramique conductrice des ions, pour l'indication d'une charge respective en au moins une substance donnée à l'avance.

12. Procédé suivant la revendication 10 ou 11,
**caractérisé en ce que**
l'on remplace le filtre (2), lorsqu'une charge donnée à l'avance de l'indicateur est dépassée et/ou lorsqu'une valeur de résistance donnée à l'avance est dépassée.

13. Procédé suivant l'une des revendications 10 à 12,
**caractérisé en ce que**
le filtre est monté dans un conduit (1) d'arrivée d'air d'une pile à combustible sur un véhicule, notamment sur un véhicule ferroviaire, dans lequel on remplace le filtre en fonction d'une voie à emprunter par le véhicule.
